# EUROPEAN PATENT APPLICATION

(11) **EP 4 560 273 A1**
(43) Date of publication of application: **28.05.2025**
(21) Application number: 23211194.8
(22) Date of filing: 21.11.2023
(51) Int. Cl.: G01F 11/00, B01F 33/841, G01F 23/14, G01F 23/296

(54) **LIQUID LEVEL MEASUREMENT**

(71) Applicant: Fast & Fluid Management B.V., 2171 KZ Sassenheim (NL)
(72) Inventor: van Koesveld, Robbert, 2171 KZ Sassenheim (NL); Baak, Mark, 2171 KZ Sassenheim (NL)
(74) Representative: De Vries & Metman

(57) **Abstract**

Dispensing machine (1), such as a tinting machine dispensing tinting pastes for paints. The dispensing machine comprises containers and a content measuring unit (25, 29) for measuring the amount of liquid in a container (4). The content measuring unit (25, 29) comprises a parameter provider (26, 30) for generating a parameter indicative for said amount of liquid and a sensor (27, 32) for sensing the parameter, both placed outside the containers (4). The containers are movable into a test position within reach of the content measuring unit (25, 29). The parameter provider can for example be a striker vibrating the container, the sensor being a vibration sensor, or a flexible wall section, the sensor being arranged to measure deformation or displacement of the wall section caused by hydraulic pressure exerted by the liquid in the container.

## Description

The present disclosure relates to a dispensing machine and to a method to determine liquid level in a container of such a dispensing machine comprising a plurality of such containers. The dispensing machine can for example be a tinting machine for preparing and mixing a paint product, such as a paint, stain, varnish, lacquer or similar composition, of a selected colour, using tinting pastes or modules.

Tinting machines are designed to dispense and mix selected colorants or tinting pastes, optionally with a selected base paint, to prepare a paint of a desired paint colour in accordance with a pre-defined formulation, for instance at a point of sale or a car refinish body shop. The tinting machine typically comprises containers or canisters for storing the tinting pastes, and a support for carrying the containers, such as a turntable or a static platform. Each container is connected or connectable to a pump via a valve that is movable between a withdrawal position connecting the pump to the container, and a dispensing position allowing the dispense of a metered amount of the tinting paste. Metering and dispensing must be done very accurately, in order to formulate the correct colour in a reproducible manner.

The containers must be refilled if they become empty or if the quality of the tinting paste in the container has deteriorated. Hitherto, the liquid level in the containers of a tinting machine is generally monitored by keeping track of the dispensed amounts of tinting paste in each container. Adjusting the liquid level after a refill is done manually. This can lead to errors. For instance, the operator may forget to adjust the level after refill or he may forget to refill after adjusting the level in the software. He could also accidentally fill the wrong container.

These mistakes can be prevented by monitoring the liquid level in the respective containers. To this end, EP 2 787 402 A1 discloses a tinting machine with fluid level sensors, such as vibration sensors, ultrasonic sensors, pressure sensors or weight sensors. US 2021/0017008 discloses a tinting machine using magnetic fluid level sensors. US 2016/0199866 discloses a tinting system using capacitive sensors. These prior art systems have the drawback that each container should be provided with a sensor connected to a data processing unit.

It is an object of the invention to provide a more simple and robust, reliable and efficient system.

The object of the invention is achieved with a dispensing machine comprising a plurality of containers, and a content measuring unit for measuring the amount of liquid present in a selected one of the plurality of container,
wherein the content measuring unit comprises a parameter provider for providing a parameter indicative for said amount of liquid and a sensor for sensing the parameter,
wherein the parameter provider and the sensor are placed outside the containers, and
wherein at least some of the containers are selectively movable into a test position within reach of the content measuring unit. This way, it is not required to use a separate measuring unit for each container. By placing the measuring unit outside the containers and by moving the containers to the test position, a single measuring unit can be used for a plurality of containers.

In a particular embodiment, each one of the containers is part of a dispense unit further comprising a pump and a valve. The parameter provider can be part of the dispense unit, or is arranged to generate a signal by interacting with a part of the dispense unit, e.g., a valve housing of the valve, or alternatively a part of the pump cylinder or a tubular line connecting the container to the valve.

Optionally, the dispense units are positioned on a movable platform, such as a turntable, wherein the platform can be moved to position a selected container into the test position where the dispense unit is operatively in reach of the content measuring unit. The dispense units can for example be arranged in such a manner that the containers are arranged in one or more concentric circular arrays, while all pumps and valves are arranged in a single outer circular array. This way, the dispense openings of the valves are always exactly above the same spot when they are in the dispense position. This also makes it possible to use a content measuring unit that can interact with any one of the dispense units when the respective dispense unit is in the test position.

In a specific embodiment, the parameter provider comprises a striker arranged to bring a selected container into resonance when the container is in the test position. In that case, the sensor can for example be or comprise one or more acoustic sensors, such as a microphone.

The striker can for example be arranged to strike the valve housing of a dispense unit moved into the test position. The valve housing is usually located at an outer border of an array of dispense units, making the dispense units easier accessible for the striker. Since the valve housing, the container and the line connecting the container to the valve housing are usually made of a metal, striking the valve housing will also bring the connected container into resonance and generate a vibration signal.

The vibration signal includes information about the quantity and/or the quality of the liquid in the container. For example, the natural frequency of a container increases with the filling level of the container. As a result, a filled container will produce an acoustic response at a much higher pitch than an empty container when brought into resonance. The pitch depends on the filling level of the container. The acoustic response of the container is measured by an acoustic sensor, such as a microphone. The acoustic sensor can be connected to a data processing unit analysing the pitch of the acoustic response to determine the liquid level.

Optionally, other parameters can also be derived from the acoustic signal, such as the degradation status, the degree of settling, or the type of tinting paste. This can for example be helpful to check if the container is filled with the correct tinting paste. For instance, a Fourier transformation of the vibration signal shows a first peak representing the natural frequency and one or more further peaks indicative of the quality or nature of the tinting paste.

The striker can be mounted to a fixed part of the dispensing machine, e.g., an inner wall of the housing or a frame of the dispensing machine.

Alternatively, the striker can be arranged to strike an outer part of the container, in particular the lid or a top side of the container.

The striker can for example be a solenoid.

In another specific embodiment, the parameter provider comprises a flexible wall section, such as a membrane, of a space in the dispense unit in fluid communication with the container of the dispense unit, and the sensor is a measuring element configured to measure deformation or displacement of the wall section by hydraulic pressure exerted by the liquid column in the container.

Optionally, the flexible wall section is a wall section of a space within the valve housing which is in fluid communication with the interior space of the container when the valve is in a withdrawal position connecting the pump to the interior space of the container.

In a specific embodiment, the flexible wall section can comprise a plate and a flexible sleeve providing a leak tight connection between the plate and the valve housing. The flexible sleeve is configured to allow movement, e.g., tilting of the plate in response to hydraulic pressure exerted by the liquid column in the container.

Optionally, the flexible wall section is a replaceable part. This makes it possible to replace the wall section if its elasticity decreases due to degradation of the material.

The dispensing machine may for example be a tinting machine for tinting paints, wherein the movable platform is a turntable, the dispense units being arranged on the turntable in one or more circular arrays, such that the pumps with the respective valves of the dispense units are arranged in a single outer circular array. The valve housing of each dispense unit can be positioned in reach of the content measuring unit when the turntable is rotated to bring the dispense unit into the test position.

The invention also pertains to a method of determining an amount of liquid in a selected one of a plurality of containers of a dispensing machine, e.g., as described above, using a measuring unit comprising a parameter provider for generating a parameter indicative for said amount of liquid and a sensor for sensing the parameter,
wherein the parameter provider and the sensor are placed outside the containers, and
wherein said selected one of the plurality of container is moved into a test position within reach of the content measuring unit;
wherein the parameter provider is activated and the generated parameter is sensed by the sensor.

As set out above, the parameter provider can be a striker vibrating the container to generate a vibration signal, the sensor being a vibration sensor, such as an acoustic sensor, and subsequently the signal is processed and analysed, e.g., by Fourier analysis or an AI module, to identify the natural frequency, and optionally to identify further frequency peaks. The further peaks can contain further information about the quality of the liquid in the container, such as the type of tinting paste and/or the degree of degradation.

The invention also relates to a dispensing machine, such as a tinting machine for tinting paint products, comprising a plurality of containers, a striker, and a vibration sensor, such as an acoustic sensor
wherein the striker and the vibration sensor are placed outside the containers, and
wherein at least some of the containers are selectively movable into a position within reach of the striker. The dispensing machine can for example comprise dispense units, each dispense unit comprising one of said plurality of containers, a piston pump and a valve connecting the pump to the container, wherein the dispense units are arranged in one or more concentric circular arrays on a turntable with the valves of all dispense units arranged in a single outer circular array. This way, the valve housings of the dispense units can selectively be positioned within reach of a striker on a fixed position, e.g., mounted to an inner wall of the housing or a frame of the dispensing machine.

The invention also relates to a dispensing machine comprising a plurality of dispense units, each dispense unit comprising a container, a pump and a valve with a valve housing and a valve body movable within the valve housing between a dispense position and a withdrawal position, the dispense unit comprising a pressure measurement means for measuring hydraulic pressure in the valve housing exerted by the liquid column in the container when the valve body closes off a dispense opening of the dispense unit. The pressure measurement means can for example comprise a pressure sensor within the valve housing. Alternatively, the dispense unit can comprise a flexible wall section, e.g., a flexible wall section of a space in the valve housing in fluid communication with the inner space of the container when the valve is in a position connecting the container to the pump. The dispensing machine comprises a sensor for sensing deformation or displacement of the flexible wall section the parameter, and the dispense units are selectively movable into a test position where the flexible wall section is within reach of the sensor.

Each of the valves and pumps can be controlled by a control unit to dispense amounts of the respective tinting paste metered in accordance with a paint formulation of a selected colour. The control unit can also be used to process data from the one or more sensors and to send a signal to an operator if one of the containers needs a refill or if the liquid content is degraded.

Optionally, the containers are provided with a stirrer, e.g., an upright rotor with blades.

The dispenser is typically suitable for use for dispensing and mixing colorants or tinting pastes for paint products, such as paints, lacquers, stains, vanishes, inks or similar compositions, e.g., at a point of sale, an industrial plant or a car repair bodyshop.

The above-described aspects will hereafter be more explained with further details and benefits with reference to the drawings showing a specific embodiments by way of example.
Figure 1A: shows a dispenser in perspective view;
Figure 1B: shows the dispenser of Figure 1A without a cover lid;
Figure 2: shows a container of the dispenser of Figure 1 in longitudinal cross section;
Figure 3: shows a vibration signal generated with the system of Figure 2 and its Fourier transform;
Figure 4: shows an alternative embodiment of a container of the dispenser of Figure 1 in longitudinal cross section
Figure 5: shows an exemplary embodiment of a flexible wall section;
Figure 6: shows the wall section of Figure 5 in a valve housing.

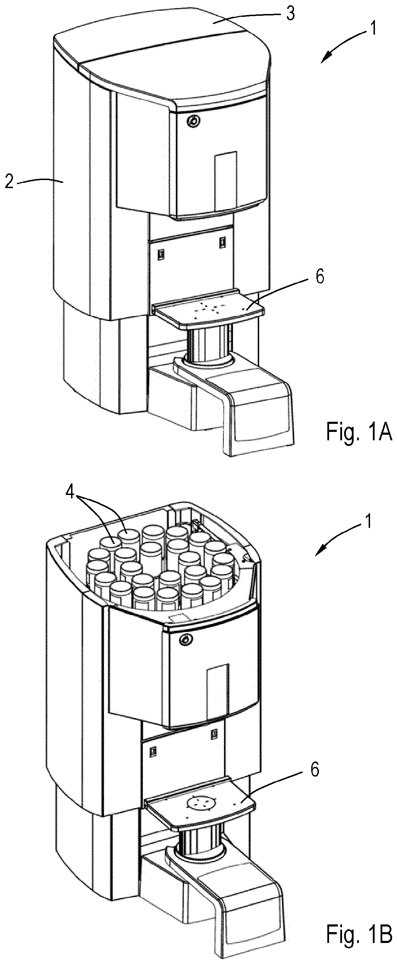

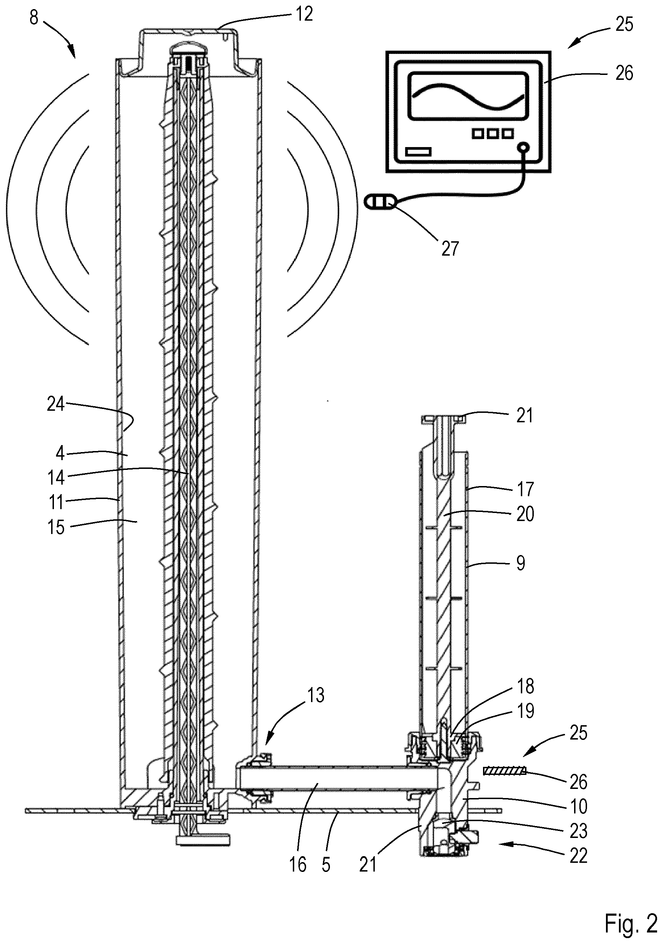

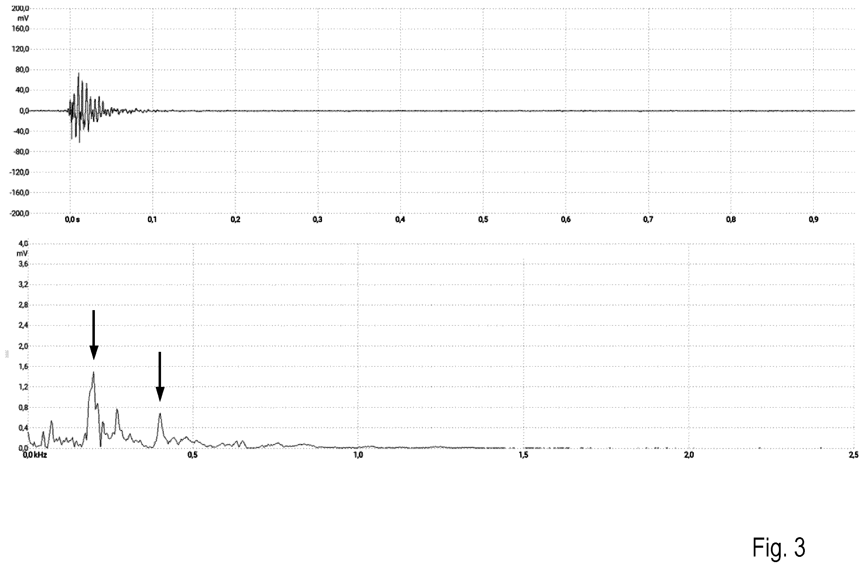

Figures 1A and 1B show a tinting machine 1 for mixing and dispensing paint products. The tinting machine 1 has a dispenser housing 2 with a cover lid 3. Figure 1B shows the tinting machine 1 without the cover lid 3, in order to show the internals of the tinting machine 1. The internals of the tinting machine 1 encase containers or canisters 4 arranged in concentric circular arrays. Each container 4 holds a tinting paste of a specific colour. The containers 4 are placed in an upright position on a turntable 5 (see Figures 2 and 3) which is coaxial with the circular arrays of containers 4. The tinting machine 1 further comprises a platform 6 for positioning a paint can or similar receptacle (not shown).

The tinting machine 1 comprises a control unit with a user interface, such as a touch screen, in communication with the control unit enabling an operator or user to input a desired paint colour. When a user inputs a desired paint colour, the control unit determines a paint formulation matching the selected paint colour, e.g., by selecting the paint formulation from a database. The determined paint formulation consists of a tinting paste or of a mixture of tinting pastes available in the respective containers 4 of the tinting machine 1, and optionally a base paint. The control unit controls rotation of the turntable to sequentially position the containers 4 containing the required tinting pastes in a dispensing position above the paint can on the platform 6 and control dispensing of the tinting pastes one by one in accordance with the paint formulation.

Each container 4 is part of a dispense unit 8 shown in Figure 2 in longitudinal cross section. The dispense unit 8 comprises the container 4, a piston pump 9 and a three way valve 10.

In the shown exemplary embodiment, the container 4 comprises a longitudinal cylindrical housing 11 with a top end capped with a removable lid 12 and a bottom end mounted to the turntable 5. The bottom end of the container 4 is provided with an outlet 13. A stirrer 14 extends coaxially within the interior space 15 of the container from the bottom end of the container 4 to the removable lid 12.

The outlet 13 of the container 4 connects to the piston pump 9 via a tubular line 16. The tubular lines 16 for containers 4 of the inner array are longer than the tubular lines 16 for the containers 4 of the outer array, such that all piston pumps 9 are arranged in a single circular array surrounding the outer array of containers 4.

The piston pump 9 comprises an upright pump cylinder 17 and a piston 18 that is movable up and down within the pump cylinder 17. The piston 18 comprises a piston head 19 sealing against the inner wall of the pump cylinder 17, and a piston rod 20 upwardly extending from the piston head 19 to the top end of the pump cylinder. The piston rod 20 has a top end provided with a gripper 21 for engaging a drive (not shown) when the dispense unit 8 is positioned in the dispensing position.

The three way valve 10 has a valve housing 21 with a dispense opening 22, and a valve body 23 within the valve housing 21. The valve body 23 is movable between a closing position, closing off the container 4, a withdrawal position connecting the container 4 with the interior space of the pump cylinder 17, and a dispensing position closing off the container 4 and connecting the pump cylinder 17 to the dispense opening 22. When the valve 10 is in the withdrawal position, the piston 18 can be moved upward to withdraw an amount of liquid from the container 4, metered in accordance with the paint formulation recipe for the desired paint colour. Subsequently, the valve 10 is moved into the dispensing position closing off the container 4 and connecting the pump cylinder 17 to the dispense opening 22. The piston 18 is then moved downward to dispense the liquid from the pump cylinder 17 into the receptacle on the platform 5.

The container 4 contains a quantity of liquid 24, in particular a tinting paste for tinting a paint. The liquid level is monitored to ensure timely refilling of the container 4 and to prevent incorrect refilling.

The mixing machine 1 is provided with a content measuring unit 25, as shown in Figure 2. In this embodiment, the content measuring unit 25 comprises a parameter provider embodied as a solenoid striker 26 and a microphone 27. To measure the liquid content of the container 4, the dispense unit 8 is moved into a test position with the valve housing 21 being in reach of a solenoid striker 26. The solenoid striker 26 does not move with the turntable 5 but has a fixed position within the housing 2 of the tinting machine 1. The solenoid striker 25 can be activated to move form a retraced position to a position striking the valve housing 21 of a dispense unit 8 in the test position. To examine the liquid level in the container 4, the solenoid striker 26 is activated to strike the valve housing 21. This causes the valve housing 21, and the rest of the dispense unit 8 including the container 4 to vibrate and brings the dispense unit 8 into resonance. As a result, the container 4 produces a vibration response with a frequency being dependent on the liquid level. The vibration response is detected by a vibration sensor, such as a microphone 27 or other type of acoustic sensor, which transfers the signal to a data processing unit 28 for calculating the liquid level on basis of the detected vibration signal. If the level is below a lower limit, a warning signal is generated and send to a user terminal of an operator. The microphone 27 can be present in any part of the interior of the tinting machine 1. Optionally, the tinting machine may comprise more than one microphone or other vibration sensors.

The upper half of the graph of Figure 3 shows a vibration signal of a resonating container 4. The lower half of the graph shows the Fourier transform of this acoustic signal. A largest peak P1 represents the natural frequency of the resonating container. The higher the frequency of this peak, the more the container 4 is filled. A second peak P2 may be characteristic, e.g., for the density of tinting paste. Each tinting paste has a characteristic density so this information can be used to check if the container is refilled with the correct type of tinting paste. Alternatively additionally, an AI module can be used for recognizing patterns in the vibration signal and/or its Fourier transform to analyse the quantity of the tinting paste in the container, the type of tinting paste and/or the degree of degradation.

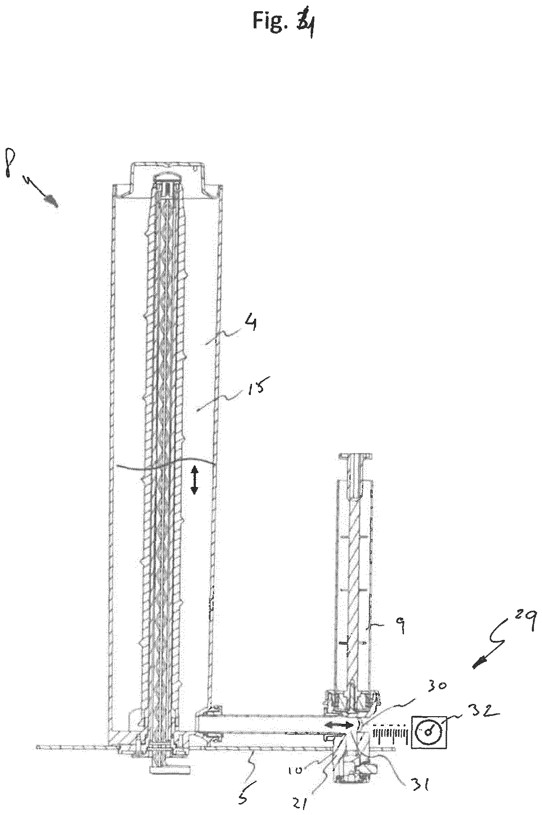

Figure 4 shows an alternative embodiment of a dispense unit 8 for the tinting machine 1 of Figure 1. In the shown embodiment, the tinting machine 1 is provided with a content measuring unit 29 comprising a parameter provider embodied as a flexible wall section 30 of a space 31 within the valve housing 21 in fluid communication with the interior space 15 of the container 4 when the valve 10 is in a withdrawal position connecting the interior space 15 of the container 4 with the piston pump 9. The flexible wall 30 will bulge and deform in response to hydraulic pressure exerted by the liquid column in the container 4. The degree of deformation of the flexible wall section 30 is a parameter dependent on the amount of liquid present in the container 4.

In an alternative embodiment, the flexible wall section comprises a plate and a flexible sleeve providing a leak tight connection between the plate and the valve housing. The flexible sleeve is configured to allow tilting of the plate in response to hydraulic pressure exerted by the liquid column in the container. The tilting angle of the plate can be measured and provides an indication of the amount of liquid present in the respective container 4.

The liquid content measuring unit 29 of the tinting machine 1 further comprises a sensor 32 for determining the degree of deformation or displacement of the flexible wall section 30. The sensor 32 has a fixed position, e.g., being mounted to an inner wall of the housing 2 or to a frame or other part of the tinting machine 1 separate from the turntable 5. While the sensor 32 stays in place, the individual dispense units 8 can be moved by the turntable 5 and placed in a test position within reach of the sensor 32.

The sensor 32 can be connected to a data processing unit (not shown) to calculate the amount of liquid in the container 4 on basis of the sensed deformation or displacement of the flexible wall section 30. If it turns out that the calculated liquid level in the container 4 is below a threshold value, the data processing unit can send an alert to an operator.

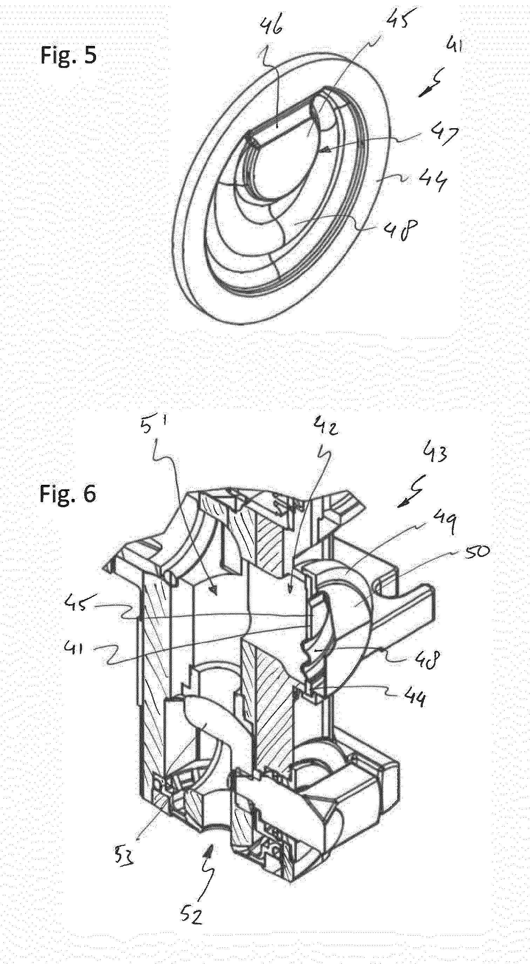

Figure 5 shows a flexible wall section 41 formed as a separate part for sealing off an opening 42 in a valve housing 43 as shown in perspective cross section in Figure 6. The flexible wall section 41 comprises a peripheral circular sealing ring 44. At a top side of the sealing ring 44 is a round rigid flap 45 with a hinge 46 hinging relative to the sealing ring 44 and a rounded side 47 connected to the sealing ring 44 by a flexible foil 48 with a harmonica fold. Due to the harmonica fold, the flexible foil 48 allows hinging by the rigid flap 45 relative to the sealing ring 44, e.g., between a flat position as shown in Figure 5, and an extended position.

In Figure 6, the peripheral sealing ring 44 is attached to a border of the opening 42 at the outside of the container in a leak tight manner and fixated by a clamping ring 49. In the shown embodiment, the flexible wall section 41 is capped by a protective cap 50, when it is not used for determining liquid level in the container. The opening 42 communicates with an interior space 51 within the valve housing 43 which in turn communicates with the interior of the associated container (not shown). The valve housing 43 has a dispense opening 52 and holds a valve body 53 which is rotatable between a dispense position (closing the container and opening the dispense opening 52) and a withdrawal position (closing the dispense opening 52 and opening the container to allow withdrawal of liquid from the container by an associated pump). In the withdrawal position, liquid from the container flows into the interior space of the valve housing 43. Hydraulic pressure exerted by the liquid depends on the liquid level within the container. This hydraulic pressure will force the rigid flap 45 to hinge outwardly. The angle at which the rigid flap 45 hinges is a measure of the hydraulic pressure, and this in turn is a measure of the liquid level in the container.

It is noted that the drawings are schematic, not necessarily to scale and that details that are not required for understanding the present invention may have been omitted. The terms "upward", "downward", "below", "above", and the like relate to the embodiments as oriented in the drawings, unless otherwise specified. Further, elements that are at least substantially identical or that perform an at least substantially identical function are denoted by the same numeral.

## Claims

1. Dispensing machine (1) comprising a plurality of containers (4), a content measuring unit (25, 29) for measuring the amount of liquid present in a selected one of the plurality of containers (4),
wherein the content measuring unit (25, 29) comprises a parameter provider (26, 30) for generating a parameter indicative for said amount of liquid and a sensor (27, 32) for sensing the parameter,
wherein the parameter provider (26, 30) and the sensor (27, 32) are placed outside the interior of the containers (4), and
wherein at least some of the containers are selectively movable into a test position within reach of the content measuring unit (25, 29).

2. Dispensing machine according to claim 1, wherein each one of the containers (4) is part of a dispense unit (8) further comprising a pump (9) and a valve (10);
wherein the parameter provider (26, 30) is part of the dispense unit (8), or is arranged to generate a signal by interacting with a part of the dispense unit (8), e.g., a valve housing (21) of the valve (10).

3. Dispensing machine according to claim 2, wherein the dispense units (8) are positioned on a movable platform, such as a turntable (5), wherein the platform can be moved to position a selected one of the plurality of containers (4) into a test position where the dispense unit (8) is operatively in reach of the content measuring unit (25, 29).

4. Dispensing machine according to claim 3, wherein the parameter provider comprises a striker (26) arranged to bring said selected container (4) into resonance when the container is in the test position;
wherein the sensor comprises a vibration sensor, e.g., an acoustic sensor, such as a microphone (27).

5. Dispensing machine according to claim 4, wherein the striker (26) is arranged to strike the valve housing (21) of a dispense unit (8) moved into the test position.

6. Dispensing machine according to claim 5, wherein the striker is a solenoid striker (26).

7. Dispensing machine according to claim 2 or 3,
wherein the parameter provider comprises a flexible wall section (30), such as a membrane, of a space in the dispense unit in fluid communication with the container of the dispense unit, and the sensor is a measuring element (32) configured to measure deformation or displacement of the wall section by hydraulic pressure exerted by the liquid in the container (4).

8. Dispensing machine according to claim 7, wherein the flexible wall section (30) is a wall section of a space within the valve housing (21) which is in fluid communication with the interior space (15) of the container (4) when the valve (10) is in a withdrawal position connecting the pump (9) to the interior space (15) of the container (4).

9. Dispensing machine according to any one of the preceding claims wherein the dispensing machine is a tinting machine (1) for tinting paints, wherein the movable platform is a turntable (5), wherein the dispense units are arranged on the turntable in one or more circular arrays, such that the pumps (9) with the respective valves (10) of the dispense units (8) are arranged in a single outer circular array, wherein the valve housing of each dispense unit is in reach of the content measuring unit (25, 29).

10. Method of determining an amount and/or quality of liquid in a selected one of a plurality of containers (4) of a dispensing machine (1) using a content measuring unit (25, 29) comprising a parameter provider (26, 30) for generating a parameter indicative for said amount of liquid and a sensor (27, 32) for sensing the parameter,
wherein the parameter provider and/or the sensor are placed outside the containers, and
wherein a said selected one of the plurality of containers is moved relative to the sensor into a position within reach of the content measuring unit (25, 29);
wherein the parameter provider (26, 30) is activated and the generated parameter is sensed by the sensor (27, 32).

11. Method according to claim 10, wherein the parameter provider is a striker vibrating the container to generate a vibration signal, the sensor being a vibration sensor, such as an acoustic sensor, and subsequently the signal is processed and analysed, e.g., by Fourier analysis and/or an AI module, to identify the natural frequency, and optionally to identify further frequency peaks.

12. Method according to claim 10, wherein the parameter indicative for the amount of liquid is hydraulic pressure in a space which is in fluid communication with the interior space (15) of the container (4), e.g., an interior space of a valve housing.

13. Method according to claim 12, wherein the hydraulic pressure is measured with a pressure sensor.

14. Method according to any one of claims 10 to 13, wherein the dispenser comprises a flexible wall section (30), such as a membrane, of a space in the dispense unit in fluid communication with the container of the dispense unit, and the sensor is a measuring element (32) configured to measure deformation or displacement of the wall section caused by hydraulic pressure exerted by the liquid in the container (4).
